# EUROPÄISCHE PATENTSCHRIFT

(11) **EP 2 243 618 B1**
(45) Veröffentlichungstag und Bekanntmachung des Hinweises auf die Patenterteilung: **31.10.2012**
(21) Anmeldenummer: 09005613.6
(22) Anmeldetag: 22.04.2009
(51) Int. Cl.: B29C 59/04, B29C 43/22, B29C 47/88, B29C 69/02

(54) **Verfahren zur Herstellung einer thermoplastischen Folie mit einer dreidimensional strukturierten Oberfläche**
Method for manufacturing a thermoplastic film with a 3D structured surface
Procédé de fabrication d'un film thermoplastique doté d'une surface structurée tridimensionnelle

(43) Veröffentlichungstag der Anmeldung: 27.10.2010
(73) Patentinhaber: Nordenia Deutschland Gronau GmbH, 48599 Gronau (DE)
(72) Erfinder: Gründken, Marcel, 48599 Gronau (DE); Bader, Herbert, 48356 Nordwalde (DE); Hagemann, Andreas, 46414 Rhede (DE)
(74) Vertreter: Albrecht, Rainer Harald

(56) Entgegenhaltungen:
- EP-A1- 1 316 402
- EP-A2- 1 504 877
- WO-A1-99/22931
- DE-A1- 10 346 124
- DE-C1- 19 524 076
- US-A- 4 363 686

## Beschreibung

Die Erfindung betrifft ein Verfahren zur Herstellung einer thermoplastischen Folie mit einer dreidimensional strukturierten Oberfläche, wobei ein Kunststoffschmelzefilm durch eine Schlitzdüse extrudiert, danach geformt und gekühlt wird und die Oberfläche der Folie dreidimensional strukturiert wird.

Thermoplastische Polymere sind Kunststoffe, die, wenn sie in dem für den Werkstoff für Verarbeitung und Anwendung typischen Temperaturbereich wiederholt erwärmt und abgekühlt werden, thermoplastisch bleiben. Unter thermoplastisch wird die Eigenschaft eines Kunststoffs verstanden, in einem für ihn typischen Temperaturbereich wiederholt in der Wärme zu erweichen und beim Abkühlen zu erhärten. Im erweichten Zustand sind Thermoplaste wiederholt durch Fließen als Formteil, Extrudat oder Umformteil zu Gegenständen formbar.

Die Oberflächen von Kunststoff-Formteilen werden häufig aus optischen und haptischen Gründen mit einer Strukturierung versehen. Gerade im Bereich des Automobilinterieurs ist ein starker Trend zur Verbesserung der Qualitätsanmutung zu beobachten. Dieser Trend hat dazu geführt, dass dort verstärkt strukturierte Oberflächen zur Anwendung kommen. Durch strukturierte Oberflächen kann beispielsweise eine Lederoptik nachgeahmt werden. Auch zur Verbesserung der Griffigkeit oder Kratzfestigkeit ist ein Einsatz von strukturierten Oberflächen vorteilhaft.

Zur Erzeugung von Formteilen mit einer strukturierten Oberfläche wird zum Beispiel die Narbenstruktur und Bauteilgeometrie als Negativ in eine Werkzeugform gebracht, die Formhaut durch Sinter- oder Sprühverfahren ausgeformt und danach entnommen. Nach einem sich anschließenden Hinterschäumungsprozess erhält man ein dreidimensionales Bauteil, dessen Narbenstruktur dem der im Werkzeug eingebrachten Narbe entspricht.

In der WO 2007/104588 A1 wird ein Verfahren zur Herstellung einer thermoplastischen Folie mit einer dreidimensional strukturierten, geprägten Oberfläche beschrieben. Die Folie wird einer Elektronenstrahlvernetzung unterworfen. Dabei werden einzelne flächige Bereiche der Folie unterschiedlich stark vernetzt. Bereiche, die beim Verformen höheren Auszugsgraden unterworfen sind, weisen andere Vernetzungsgrade auf als ihre Nachbarbereiche.

In der WO 2006/122606 A2 wird ein Verfahren zur Herstellung von dreidimensional strukturierten Oberflächen von Gegenständen beschrieben. Ziel ist dabei die Reproduktion einer Originaloberfläche. Dabei wird die Topologie der Originaloberfläche ermittelt und die Daten zur Steuerung eines Bearbeitungswerkzeuges genutzt. In der Schrift wird der Einsatz dieses Verfahrens zur Herstellung von Prägewalzen für thermoplastische Folien beschrieben. Dabei wird die Reproduktionsoberfläche als Walzenoberfläche ausgebildet. Die dreidimensional strukturierte Gegenstandsoberfläche ist invers zur Originaloberfläche ausgebildet. Mit diesen Walzen werden Folien strukturiert. Das Verfahren wird insbesondere bei thermoplastischen oder elastischen Polymerfolien angewandt.

Aus WO 99/22931 A1, das ein Verfahren gemäß dem Oberbegriff des Anspruchs 1 offenbart, ist ein Verfahren zur Herstellung einer mehrschichtigen optischen Folie bekannt, die eine Außenschicht mit einer strukturierten Oberfläche aus z. B. Polypropylen oder Polycarbonat aufweist. Bei diesem Verfahren wird ein mehrschichtiger Kunststoffschmelzefilm erzeugt, der in einen Spalt zwischen einer Kühlwalze und einem um laufenden Band extrudiert und in diesem Spalt dreidimensional geprägt sowie gleichzeitig gekühlt wird. Das Band kann ein Metallband sein.

Die EP 1 852 239 A2 beschreibt ein Verfahren zur Erzeugung einer dreidimensionalen Freiformfläche mit haptisch und optisch wahrnehmbaren Mikrostrukturen. Dabei werden die im Formprozess der Freiformfläche hervorgerufenen Dehnungen bestimmt. Eine elastische Folie wird so bearbeitet, dass mindestens eine strukturtragende Fläche auf der Folie erzeugt wird.

Die DE 10 2006 021 477 A1 beschreibt ein Verfahren zum Abformen mikrostrukturierter dreidimensionaler Freiformflächen. Zunächst wird eine Abformung erstellt, welche die von einer Urform abgenommene mikrostrukturierte Oberfläche aufweist. Dann wird ein Kern bereitgestellt, welcher eine Kontur aufweist, die zur Kontur der dreidimensionalen Freiformfläche passend gefräst ist. Die Abformung wird nun mit einer dünnen Schicht aus polymerem Material beschichtet und auf den Kern aufgesetzt. Die Schicht aus polymerem Material wird dann mit dem Kern verbunden. Anschließend wird die Abformung abgenommen.

Bei der Herstellung von Formteilen mit einer strukturierten Oberfläche kann die Narbenstruktur durch eine Folie eingebracht werden, die bereits eine Oberflächenstruktur aufweist. Die Oberflächenstruktur wird bei herkömmlichen Verfahren beispielsweise mit einem Kalanderwalzwerk auf die Folie geprägt. Zur Herstellung von Formteilen wird die Folie dann hinterspritzt oder hinterpresst und somit verformt. Bei dem Formprozess wird die Oberflächenstruktur der Folie hohen Druck- und Temperaturbelastungen ausgesetzt. Dies führt dazu, dass sich die Struktur verändert oder zurückbildet. Insbesondere in Zonen starker Verformung, ist dieser Effekt zu beobachten. Optisch zeigt sich das auch durch ein Aufglänzen der entsprechend verformten Folienbereiche. Auch der Memory-Effekt von Kunststoffen ist für eine Rückverformung verantwortlich. Dieser tritt vorzugsweise bei Temperaturerhöhungen auf.

In der Praxis wird versucht, diese Effekte auszugleichen. Entsprechende Bereiche können konstruktiv so gestaltet werden, dass diese Effekte berücksichtigt werden. Eine weitere Möglichkeit besteht darin, die entsprechenden Bereiche zu vernetzen. Dadurch wird die Molekülanordnung fixiert.

Der Erfindung liegt die Aufgabe zugrunde, eine Folie mit einer dreidimensional strukturierten Oberfläche zu erzeugen, deren Oberflächenstruktur auch bei starker Verformung erhalten bleibt.

Gegenstand der Erfindung und Lösung dieser Aufgabe ist ein Verfahren nach Anspruch 1.

Bei dem erfindungsgemäßen Verfahren wird der Kunststoffschmelzefilm in einen Spalt zwischen einer Kühlwalze und einem umlaufenden Metallband extrudiert und in diesem Spalt dreidimensional geprägt. Das Metallband oder die Umfangsfläche der Kühlwalze weist eine Narbenstruktur auf, die auf den Schmelzefilm übertragen wird. Bei dem Metallband handelt es sich beispielsweise um ein umlaufendes endloses Stahlband. Durch den Einsatz dieses speziellen Stahlbandes, dem sogenannten Sleeve-Band, werden optimale optische und mechanische Eigenschaften bei den produzierten Folien erreicht. Durch die flächige Anpressung werden, im Vergleich zu der mit einem normalen Glättwerk erzeugten Folie, die Eigenspannungen und somit der Schrumpf für die Weiterverarbeitung reduziert.

Erfindungsgemäß erfolgt die Prägung gleichzeitig mit der Folienformgebung. Durch eine geeignete Prozessführung wird erreicht, dass die Narbinitiierung im thermoplastischen Bereich, d. h. im Schmelzezustand, erfolgt. Da die Abkühlgeschwindigkeit bei dem erfindungsgemäßen Verfahren sehr hoch ist, wird die Bildung von Kristalliten weitestgehend unterdrückt. Es entsteht eine amorphe Molekülstruktur. Nach dem erfindungsgemäßen Verfahren werden urgeformte Folien hergestellt. Bei diesen Folien hat sowohl die Narbenstruktur als auch die eigentliche Folie ein niedriges Relaxationspotential. Da diese Folien amorphe Strukturen aufweisen, sind sie schrumpf- und schwindungsfrei.

Bei dem erfindungsgemäßen Verfahren finden gleichzeitig ein beidseitiges Flächenglätten der Schmelzebahn, eine beidseitige Kontaktkühlung und eine dreidimensionale Strukturierung der Folienoberfläche unter Verwendung des Sleeve-Bandes statt. Durch das flächige Anpressen werden die induzierten Eigenspannungen in der Folie vermindert. Somit schrumpft die Folie beim Weiterverarbeiten weniger im Vergleich zu einer geglätteten Folie.

Die mittels dieser Technik hergestellten Folien besitzen, im Vergleich zu Castfolien, aufgrund der beidseitigen Flächen-Kontaktkühlung keine Düsenlinien. Im Vergleich zu konventionell geglätteten Folien nach der Glättwerkstechnik weisen sie niedrigere Eigenspannungen auf. Grund dafür sind die niedrigen Anpresskräfte.

Die Spannung des Sleeve-Bandes ist einstellbar. Auch die Kontaktlänge des Sleeve-Bandes mit der Folie oder der Umschlingungswinkel können entsprechend den Produktanforderungen verändert werden.

Bei dem erfindungsgemäßen Verfahren wird der Schmelzefilm nicht an einem Punkt der Walze gekühlt, wie bei der Herstellung von Castfolien oder bei Sheet-Extrusions-Systemen, sondern entlang des Sleeve-Bandes. Dabei tritt ein Kontaktstreifen zwischen dem Schmelzefilm und dem Metallband auf, der beispielsweise 15 cm betragen kann.

Erfindungsgemäß werden Mehrschichtfolien hergestellt, wobei die einzelnen Schichten durch Coextrusion zusammengeführt werden. Die Coextrusion ist dabei in bis zu fünf Lagen möglich. Die äußere Schicht der Folie, die nach dem beschriebenen Verfahren mit einer dreidimensionalen Strukturierung versehen wird, besteht aus einem thermoplastischen Polyurethan-Elastomer (TPU), wobei bei der Coextrusion zumindest in die äußere strukturierte Schicht der Folie ein Isocyanat zudosiert wird. Als besonders geeignet haben sich Diphenylmethandiisocyanat (MDI) oder Hexamethylendiisocyanat (HDI) herausgestellt. Dabei erweist es sich als besonders günstig, diese in einem Anteil von bis zu 20 Gew.-%, bezogen auf die jeweilige Schicht der Folie, zuzuführen. Dabei hat sich ein Anteil an Diphenylmethandiisocyant (MDI) bzw. Hexamethylendiisocyanat (HDI) von mehr als 6 Gew.-% und weniger als 15 Gew.-%, bezogen auf die jeweilige Schicht der Folie, als besonders vorteilhaft herausgestellt.

Isocyanate führen zu einer Vernetzung der Polymere. Die Vernetzung von Polymeren entsteht durch Ausbildung von Bindungen zwischen den Polymerketten. Bei herkömmlichen Verfahren wird häufig eine Elektronenstrahlenvernetzung eingesetzt. Bei der Elektronenstrahlenvernetzung entstehen die den Vernetzungsprozess startenden Radikale durch die Einwirkung energiereicher Strahlung auf die Polymermoleküle. Die Radikale reagieren in Folgereaktionen mit den Molekülen der Polymerketten und führen sowohl zur Ausbildung kovalenter Bindungen zwischen den einzelnen Ketten, als auch zum Abbau der Makromoleküle durch Kettenspaltung. Kettenspaltung und Kettenaufbau laufen parallel. Erfindungsgemäß wird die Vernetzung durch Zudosierung eines Isocyanats bei der Extrusion erreicht. Diese Reaktivextrusion bewirkt eine Anvernetzung bzw. eine Molmassenerhöhung. Neben der erhöhten Narbstabilität erreicht man auch die Stabilisierung einer Mattierung der Oberfläche, die ebenfalls durch die Oberfläche des Sleeve-Bandes bzw. der Kühlwalze übertragen werden kann.

Auch die unterhalb der äußeren Schicht liegende Schicht kann mit einem Isocyanat vernetzt werden. Zusätzlich kann diese Schicht ein Polymer mit einer hohen Schmelzefestigkeit und/oder elastomeren Eigenschaften aufweisen. Als Polymere eignen sich beispielsweise Polyether Block Amid (PEBA), Polyamid (PA), Acrylnitril-Butadien-Styrol (ABS) oder sonstige Styrol-Block-Copolymere.

Das zusätzliche Polymer soll einen selbstausgleichenden Effekt bei einer Deformation einstellen. Die darunter liegenden Schichten können beispielsweise aus Polyolefinen, wie z.B. Polypropylen (PP), Polyethylen (PE), thermoplastischen Olefin (TPO) oder Acrylnitril-Butadien-Styrol (ABS) bestehen.

Weitere Vorteile und Merkmale der Erfindung ergeben sich aus der Beschreibung von Ausführungsbeispielen anhand von Abbildungen und aus den Abbildungen selbst.

Dabei zeigen
- **Fig. 1a**: ein Formteil, welches mit einer geprägten Folie überzogen ist, und
- **Fig. 1b**: einen Querschnitt der über das Formteil gezogenen Folie,
- **Fig. 2**: ein Verfahren zur Prägung von thermoplastischen Folien im Sleeve-Touch Prozess,
- **Fig. 3**: den Einfluss des Anteils an Diphenylmethandiisocyanat (MDI) auf die Zugfestigkeitkeiten und die Dehnungen von Folien,
- **Fig. 4**: den schichtweisen Aufbau einer nach dem Reaktivextrusionsverfahren hergestellten Folie.

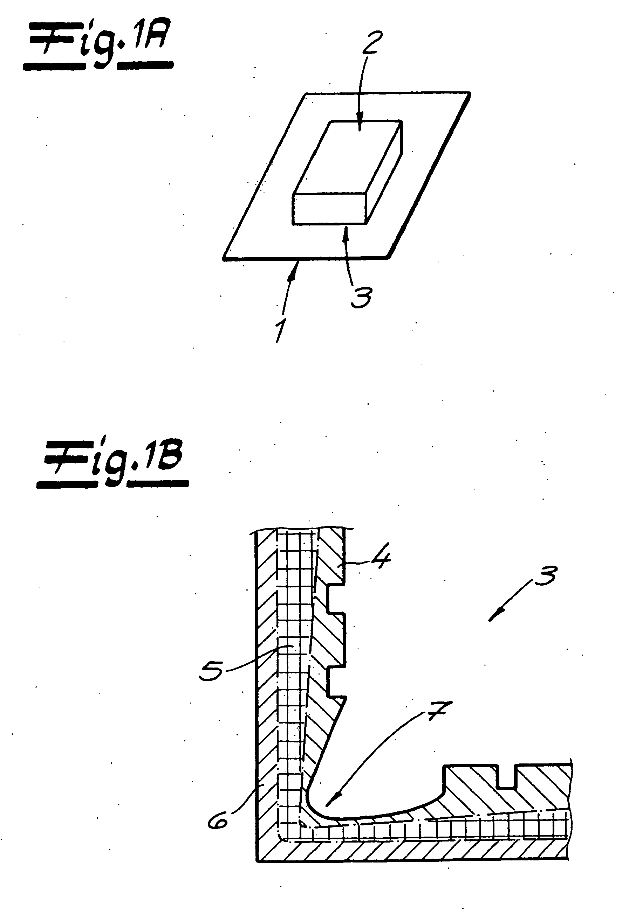

In Fig. 1a ist ein Formteil 1 dargestellt. Das Formteil 1 ist von einer tiefgezogenen Folie überspannt und weist beispielsweise eine Erhebung 2 auf. Der Bereich 3 der Folie bildet den Übergang zur Erhebung 2. Dieser Bereich 3 ist in Fig. 1b vergrößert dargestellt. Dabei zeigt Fig. 1b die tiefgezogene Folie in diesem Bereich 3 im Querschnitt. Die Folie setzt sich aus mehreren Schichten 4, 5 und 6 zusammen, wobei die Oberflächenschicht 4 der Folie mit einer Prägung versehen ist. Bei der dreidimensional strukturierten Oberfläche der Folie kann es sich beispielsweise um eine Narbung oder eine Lederoptik handeln. Zwischen der rückseitigen Schicht 6 und der Oberflächenschicht 4 befindet sich eine mittlere Schicht 5. An der Stelle 7 findet der Übergang zu der Erhebung 2 des Formteils 1 statt. An dieser Stelle 7 erkennt man die Problematik des Narbauszugs. Optisch zeigt sich diese Problematik auch durch ein Aufglänzen des entsprechend verformten Folienbereichs.

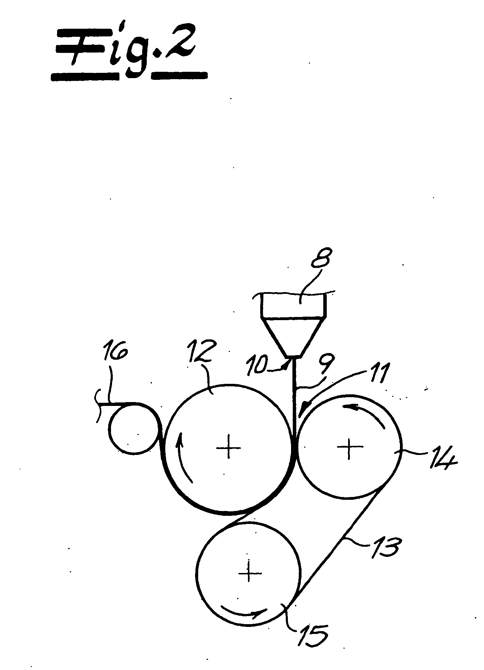

In Fig. 2 ist das erfindungsgemäße Verfahren zur Herstellung einer dreidimensional strukturierten Oberfläche dargestellt. Der Extruder 8 presst den Schmelzefilm 9 durch eine Breitschlitzdüse 10. Der Schmelzefilm 9 fließt aus der Breitschlitzdüse 10 in einen Spalt 11 zwischen einer Kühlwalze 12, die auch als Chill Roll bezeichnet wird, und einem Metallband 13, das auch als Sleeve-Band bezeichnet wird. Bei dem Metallband 13 handelt es sich um ein Endlosband, das zwischen den Walzen 14 und 15 gespannt ist. Als Metallband 13 kann beispielsweise ein Stahlband eingesetzt werden. Die Spannung des Metallbandes 13 ist einstellbar. Auch die Kontaktlänge des Metallbandes 13 mit dem Schmelzefilm 9 kann entsprechend den Produktionsanforderungen verändert werden.

Erfindungsgemäß wird die dreidimensionale Prägung im Spalt 11 zwischen der Kühlwalze 12 und dem Metallband 13 auf den Schmelzefilm 9 aufgebracht. Dazu weist das Metallband 13 eine Narbenstruktur auf, die auf den Schmelzefilm 9 übertragen wird. Die folienseitige Oberfläche des Metallbandes 13 bildet die Negativform der aufzubringenden dreidimensionalen Oberflächenstruktur. Der Schmelzefilm 9 wird von dem Metallband 13 mit der gewünschten positiven Oberflächenstruktur geprägt. Alternativ kann anstelle des Metallbandes auch die Umfangsfläche der Kühlwalze 12 eine Narbenstruktur aufweisen, die auf den Schmelzefilm 9 übertragen wird.

Die Narbinitiierung erfolgt im thermoplastischen Bereich, d.h. im Schmelzezustand. Die Abkühlgeschwindigkeit des Schmelzefilms ist bei dem Prozess sehr hoch. Dadurch wird die Bildung von Kristallen weitestgehend unterdrückt und es entsteht eine amorphe Molekülstruktur.

Die geprägte Folie 16 kann aufgewickelt oder mittels einer Formatscheide- und Stapeleinheit abgelegt werden.

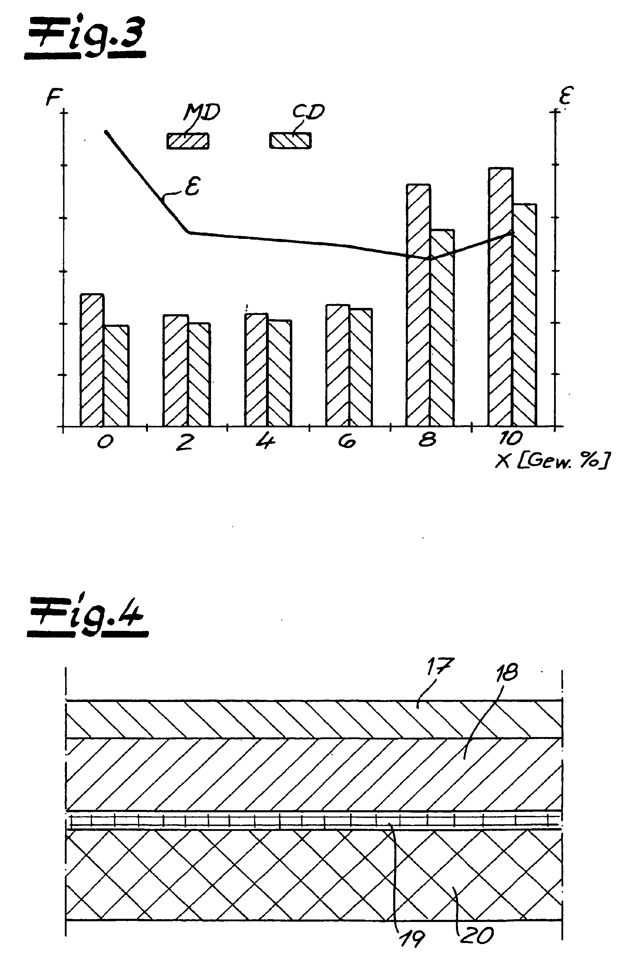

In Fig. 3 ist der Einfluss des Anteils X an Diphenylmethandiisocyanat (MDI) auf die Zugfestigkeiten F sowohl in Maschinenrichtung MD als auch in Querrichtung CD und die Dehnungen ε dargestellt. Die Zugfestigkeiten sind in dem Diagramm als Balken dargestellt. Bei einem Anteil an MDI von 8 bis 10 Gew.-% steigt die Zugfestigkeit stark an.

Die Dehnungen sind als Linie dargestellt. Mit zunehmendem Anteil an MDI nimmt die Dehnung ab. Sie erreicht ihr Minimum bei einem Anteil von 8 Gew.-% MDI und steigt danach wieder leicht an.

In Fig. 4 ist exemplarisch der Aufbau einer erfindungsgemäßen mehrschichtigen Folie dargestellt. Die äußere Schicht 17 der Folie, welche die Oberfläche des Formteils bildet, besteht aus einem thermoplastischen Polyurethan-Elastomer (TPU), zu dem 10 Gew.-% Isocyanat zudosiert wurde. Die Schichtdicke beträgt 100 µm.

Die Schicht 18 unter der Oberflächenschicht 17 wurde ebenfalls mit einem Isocyanat vernetzt. Sie enthält 15 Gew.-% Isocyanat. Die Schicht 18 hat eine Dicke von 200 µm. Zusätzlich enthält diese Schicht neben einem thermoplastischen Polyurethan-Elastomer (TPU) ein Polyether Block Amid (PEBA). Prinzipiell sollte ein Polymer mit einer hohen Schmelzefestigkeit und/oder elastomeren Eigenschaften eingesetzt werden. Das zusätzliche Polymer bewirkt einen selbstausgleichenden Effekt bei einer Deformation.

Unter der Schicht 18 ist ein Haftvermittler 19 mit einer Schichtdicke von 50 µm aufgebracht. Die untere Schicht 20 kann aus Polyolefinen, wie beispielsweise Polypropylen (PP) oder thermoplastischen Polyurethan-Elastomeren (TPU) bestehen.

## Patentansprüche

1. Verfahren zur Herstellung einer thermoplastischen Folie (16) mit einer dreidimensional strukturierten Oberfläche, die zur Herstellung von Formteilen hinterspritzt oder hinterpresst und somit verformt werden kann,
wobei ein Kunststoffschmelzefilm (9), der mehrere durch Coextrusion zusammengeführte Schichten (17, 18, 19, 20) aufweist, durch eine Schlitzdüse (10) extrudiert, danach geformt und gekühlt wird und die Oberfläche der Folie (16) dreidimensional strukturiert wird,
wobei der Kunststoffschmelzefilm (9) zu diesem Zweck in einen Spalt (11) zwischen einer Kühlwalze (12) und einem umlaufenden Metallband (13) extrudiert und in diesem Spalt (11) dreidimensional geprägt wird
, **dadurch gekennzeichnet, dass**
die strukturierte äußere Schicht (17) der Folie (16) aus einem thermoplastischen Polyurethan-Elastomer (TPU) gefertigt wird und dieser Schicht (17) bei der Coextrusion ein Isocyanat zur Vernetzung des Polymers zudosiert wird.

2. Verfahren nach Anspruch 1, **dadurch gekennzeichnet, dass** das Metallband (13) oder die Umfangsfläche der Kühlwalze (12) eine Narbenstruktur aufweist, die auf den Kunststoffschmelzefilm (9) übertragen wird.

3. Verfahren nach Anspruch 1 oder 2, **dadurch gekennzeichnet, dass** die Folie unterhalb der äußeren Schicht (17) eine Zwischenschicht (18) aufweist, die aus einer Mischung aus einem thermoplastischen Polyurethan-Elastomer (TPU), einem Polyesterblockamid (PEBA) und einem Isocyanat gefertigt wird.

4. Verfahren nach einem der Ansprüche 1 bis 3, **dadurch gekennzeichnet, dass** Diphenylmethandiisocyanat (MDI) und/oder Hexamethylendiisocyanat (HDI) von bis zu 20 Gew.-%, bezogen auf die jeweilige Schicht der Folie (17, 18), zudosiert wird.

5. Verfahren nach Anspruch 4, **dadurch gekennzeichnet, dass** Diphenylmethandiisocyanat (MDI) und/oder Hexamethylendiisocyanat (HDI) von mehr als 6 Gew.-% und weniger als 12 Gew.-% bezogen auf die jeweilige Schicht der Folie (17, 18) zudosiert wird.

## Claims

1. A method for producing a thermoplastic film (16) having a three-dimensionally structured surface, which can be back-moulded or back-injected and can thus be shaped to produce moulded parts,
wherein a plastic melt film (9) having a plurality of layers (17, 18, 19, 20) brought together by coextrusion is extruded through a flat-sheet die (10), then shaped and cooled, and the surface of the film (16) is structured three-dimensionally,
wherein, to this end, the plastic melt film (9) is extruded into a gap (11) between a cooling roller (12) and a revolving metal strip (13) and is embossed three-dimensionally in this gap (11),
**characterized in that** the structured outer layer (17) of the film (16) is manufactured from a thermoplastic polyurethane elastomer (TPU), and an isocyanate is added to this layer (17) in coextrusion for cross-linking of the polymer.

2. The method according to Claim 1, **characterized in that** the metal strip (13) or the circumferential surface of the cooling roller (12) has a grainy structure, which is transferred to the plastic melt film (9).

3. The method according to Claim 1 or 2, **characterized in that** the film has an intermediate layer (18) made of a mixture of a thermoplastic polyurethane elastomer (TPU), a polyester block amide (PEBA) and an isocyanate beneath the outer layer (17).

4. The method according to any one of Claims 1 to 3, **characterized in that** diphenylmethane diisocyanate (MDI) and/or hexamethylene diisocyanate (HDI) is/are added in the amount of up to 20% by weight, based on the respective layer of the film (17, 18).

5. The method according to Claim 4, **characterized in that** diphenylmethane diisocyanate (MDI) and/or hexamethylene diisocyanate (HDI) is added in the amount of more than 6% by weight and less than 12% by weight, based on the respective layer of the film (17, 18).

## Revendications

1. Procédé de fabrication d'une feuille thermoplastique (16) ayant une surface à structure tridimensionnelle pouvant faire l'objet d'une injection par l'arrière ou d'un pressage par l'arrière et ainsi être déformée afin de fabriquer des pièces moulées,
un film en matière plastique fondue (9) qui comporte plusieurs couches (17, 18, 19, 20) réunies par co-extrusion étant extrudé à travers une filière plate (10) puis formé et refroidi, et la surface de la feuille (16) étant dotée d'une structure tridimensionnelle,
le film en matière plastique fondue (9) étant, à cet effet, extrudé dans une fente (11) entre un cylindre de refroidissement (12) et une bande métallique tournante (13) et subissant dans cette fente (11) un gaufrage tridimensionnel,
**caractérisé en ce que** la couche extérieure structurée (17) de la feuille (16) est réalisée en un élastomère de polyuréthane thermoplastique (TPU) et un isocyanate est ajouté à cette couche (17) lors de ladite co-extrusion pour ainsi réticuler le polymère.

2. Procédé selon la revendication 1, **caractérisé en ce que** la bande métallique (13) ou la surface circonférentielle du cylindre de refroidissement (12) présente une structure de grain qui est transférée au film en matière plastique fondu (9).

3. Procédé selon les revendications 1 ou 2, **caractérisé en ce que** la feuille présente, en-dessous de la couche extérieure (17), une couche intermédiaire (18) qui est réalisée en un mélange d'un élastomère de polyuréthane thermoplastique (TPU), d'un polyester bloc amide (PEBA) et d'un isocyanate.

4. Procédé selon l'une des revendications 1 à 3, **caractérisé en ce que** l'on ajoute du diisocyanate de diphénylméthane (MDI) et/ou du diisocyanate d'héxaméthylène (HDI) dans une proportion pouvant atteindre 20 % en poids, par rapport à la couche concernée de la feuille (17, 18).

5. Procédé selon la revendication 4, **caractérisé en ce que** l'on ajoute du diisocyanate de diphénylméthane (MDI) et/ou du diisocyanate d'héxaméthylène (HDI) dans une proportion supérieure à 6 % en poids et inférieure à 12 % en poids, par rapport à la couche concernée de la feuille (17, 18).
